# EUROPEAN PATENT APPLICATION

(11) **EP 4 790 374 A1**
(43) Date of publication of application: **12.08.2026**
(21) Application number: 25275008.8
(22) Date of filing: 06.02.2025
(51) Int. Cl.: G01L 1/24, G01M 11/08, G01M 11/00, G01B 11/16, H01M 10/48, H01M 50/289

(54) **SENSOR FOR BATTERY SYSTEM MONITORING**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

An optical strain sensor for use in a battery system comprising a planar optical waveguide having a planar geometry comprising a Bragg grating located in a core of the planar optical waveguide. The core extends longitudinally along a first direction of the planar optical waveguide and defines an optical propagation direction of the planar optical waveguide. A battery cell comprising the optical strain sensor. An inter-cell spacer comprising the optical strain sensor. A battery system comprising a plurality of the battery cells and/or a plurality of the inter-cell spacers.

## Description

### FIELD

The present invention relates to sensors used to monitor the condition and performance of battery systems.

### BACKGROUND

The design and development of energy storage management systems for safety critical applications is a challenging task. Accurate monitoring of new battery cell technologies is critical to the safe and prolonged operation of battery packs. Monitoring the health of battery cells to determining state of charge (SoC) and state of health (SoH) of battery cells is vital in establishing the condition of the cells though their entire lifecycle and key to mitigating risks in the event of a thermal run-away condition.

### SUMMARY

According to a first aspect of the present invention, there is provided an optical strain sensor for use in a battery system, the optical strain sensor comprising a planar optical waveguide having a planar geometry comprising a Bragg grating located in a core of the planar optical waveguide, wherein the core extends longitudinally along a first direction of the planar optical waveguide and defines an optical propagation direction of the planar optical waveguide.

The planar optical waveguide may have a thickness, orthogonal to the optical propagation direction of 50 to 500 µm.

A void may be defined within the microstructure of the planar optical waveguide.

An optical fibre may be spliced to at least one of the ends of the planar optical waveguide along the optical propagation direction of the planar optical waveguide.

A first end of the optical fibre may be spliced to an end of a first planar optical waveguide and a second end of the optical fibre may be spliced to an end of a second planar optical waveguide.

A first planar optical waveguide and a second planar optical waveguide may be incorporated into a continuous planar fibre.

The optical strain sensor may further comprise a light source optically connected to the planar optical waveguide, wherein the light source is configured to provide an input signal into the planar optical waveguide. The optical strain sensor may further comprise a detector optically connected to the planar optical waveguide, wherein the detector is configured to detect a spectral response from the input signal exiting the planar optical waveguide via the Bragg grating. The optical strain sensor may also comprise a controller configured to receive the spectral response from the detector and calculate a strain magnitude exerted on the planar optical waveguide using the spectral response.

The controller may be further configured to calculate a temperature using the spectral response.

The controller may be further configured to record the strain magnitude during multiple charging and discharging cycles of the battery system and calculate a reduction of a delta between the magnitude of the strain measured when the battery is charged compared to when the battery is discharged over the multiple charging and discharging cycles. The controller may be further configured to calculate and output a battery performance indication using the calculated reduction of the delta.

The controller may be further configured to record the strain magnitude continuously over time and, in response to detecting a rate of change in the strain magnitude exceeding a predetermined threshold, either: output an alert notification, or send a signal to a circuit breaker connected to the battery system to prevent the flow of current in the battery system.

According to a second aspect of the present invention, there is provided a battery cell comprising a casing, the casing encapsulating battery components, the battery components including at least one anode and at least one cathode separated by an electrolyte and a separator, and an optical strain sensor comprising a planar optical waveguide wherein the optical strain sensor is incorporated inside the casing.

The battery cell components may have planar geometry, where the planar geometries of the battery cell components and the planar optical waveguide may be orientated parallel to one another.

The planar optical waveguide may be affixed to an inner surface of the casing.

The battery cell may be a pouch cell.

According to another aspect of the present invention, there is provided an inter-cell spacer for separating battery cells in a battery system comprising an optical strain sensor comprising a planar optical waveguide.

The inter-cell spacer may comprise a defined cavity within the structure of the inter-cell spacer, where the defined cavity holds the planar optical waveguide.

The planar optical waveguide may be affixed to a surface of the inter-cell spacer.

The inter-cell space may have a planar geometry, and the planar geometries of the inter-cell spacer and the planar optical waveguide may be orientated parallel to one another.

According to a third aspect of the present invention, there is provided a battery system comprising a plurality of battery cell including at least one battery cell comprising an optical strain sensor comprising a planar optical waveguide and/or a plurality of inter-cell spacers including at least one inter-cell spacer comprising an optical strain sensor comprising a planar optical waveguide.

The optical strain sensor of the battery system may further comprise a light source optically connected to the planar optical waveguide, wherein the light source is configured to provide an input signal into the planar optical waveguide. The optical strain sensor may further comprise a detector optically connected to the planar optical waveguide, wherein the detector is configured to detect a spectral response from the input signal exiting the planar optical waveguide. The optical strain sensor may also comprise a controller configured to receive the spectral response from the detector and calculate a strain magnitude exerted on the planar optical waveguide using the spectral response.

The controller may be further configured to calculate a temperature using the spectral response.

The controller may be further configured to record the strain magnitude during multiple charging and discharging cycles of the battery system and calculate a reduction of a delta between the magnitude of the strain measured when the battery is charged compared to when the battery is discharged over the multiple charging and discharging cycles. The controller may be further configured to calculate and output a battery performance indication using the calculated reduction of the delta.

The controller may be further configured to record the strain magnitude continuously over time and, in response to detecting a rate of change in the strain magnitude exceeding a predetermined threshold, either: output an alert notification, or send a signal to a circuit breaker connected to the battery system to prevent the flow of current in the battery system.

The battery system may further comprise a temperature sensor, a voltage sensor configured to detect the voltage between the electrodes in at least one of the plurality of battery cells, a current sensor configured to detect the current supplied by at least one of the plurality of battery cells, or an impedance sensor configured to detect the impedance between the electrodes in at least one of the plurality of battery cells.

The controller may be configured to calculate the battery performance indication also using at least one of the output of the temperature sensor, the voltage sensor, the current sensor or the impedance sensor.

A first planar optical waveguide and a second planar optical waveguide may be incorporated inside different battery cells or part of separate inter-cell spacers.

According to a fourth aspect of the present invention, there is provided a method of monitoring the condition of a battery system, the method comprising: providing an input signal, using a light source, into a planar optical waveguide having a planar geometry comprising a Bragg grating located in a core of the planar optical waveguide, wherein the core extends longitudinally along a first direction of the planar optical waveguide and defines an optic and wherein the planar optical waveguide is incorporated inside a casing of a battery cell or is part of an inter-cell spacer in the battery system; detecting a spectral response, using a detector, from the input signal exiting the planar optical waveguide via the Bragg grating; and calculating a strain magnitude exerted on the planar optical waveguide using the detected spectral response.

The method may further comprise recording the strain magnitude during multiple charging and discharging cycles of the battery system and calculating a reduction of a delta between the magnitude of the strain measured when the battery system is charged compared to when the battery is discharged over the multiple charging and discharging cycles. The method may further comprise calculating and outputting a battery performance indication using the calculated reduction of the delta.

The method may further comprise recording the strain magnitude continuously over time and, in response to detecting a rate of change in the strain magnitude exceeding a predetermined threshold, either: outputting an alert notification or sending a signal to a circuit breaker connected the battery system to prevent the flow of current in the battery system.

### BRIEF DESCRIPTION OF THE FIGURES

Embodiments of the invention will now be described by way of example only with reference to the figures, in which:
Figure 1 shows a schematic diagram of a pouch cell;
Figure 2 shows a schematic diagram of an exploded pouch cell;
Figure 3 shows a schematic diagram of a stack of pouch cells separated with inter-cell spacers;
Figure 4 shows a schematic diagram of a prismatic battery;
Figure 5 shows a schematic diagram of a planar optical waveguide;
Figure 6A shows a schematic diagram of multiple planar optical waveguides connected via optical fibres;
Figure 6B shows a schematic diagram of multiple planar optical waveguides incorporated into a continuous planar fibre;
Figure 7A shows a schematic diagram of a pouch cell with a planar optical waveguide incorporated within the casing of the pouch cell with a protruding optical fibre;
Figure 7B shows a schematic diagram of a pouch cell with a planar optical waveguide incorporated within the casing of the pouch cell with a protruding planar fibre;
Figure 7C shows a schematic diagram of a pouch cell with a planar optical waveguide incorporated within the casing of the pouch cell with the battery components exploded;
Figure 8A shows a schematic diagram of an inter-cell spacer with a planar optical waveguide affixed to the surface of the inter-cell spacer;
Figure 8B shows a schematic diagram of an inter-cell spacer with a planar optical waveguide held within a defined cavity in the inter-cell spacer;
Figure 8C shows a schematic diagram of an inter-cell spacer introduced into a battery system with a planar optical waveguide being part of the inter-cell spacer;
Figure 9A shows a schematic diagram of a battery system with multiple battery cells separated by inter-cell spacers fitted with linked planar optical waveguides;
Figure 9B shows a schematic diagram of a series of inter-cell spacers fitted with optically linked planar optical waveguides; and
Figure 9C shows a schematic diagram of a series of battery cells fitted with optically linked planar optical waveguide.

### DETAILED DESCRIPTION

There are numerous challenges facing battery engineers when designing battery systems which can be monitored during their use. For example, if sensors are to be incorporated into the battery system design, it is desirable for the sensor to be reliable with the sources of errors in measurements being minimised. It **is** also desirable to avoid having to replace a sensor incorporated into a battery system during its lifespan. In addition, the space occupied by such sensors should be minimised to both reduce the size of battery systems and, for examples where sensors are incorporated within a battery cell, maximise the energy density within the cell. A battery system sensor should also be able to provide information regarding the condition and performance of the battery so a service engineer can make an informed decision about whether to replace the battery. A sensor should also be able to detect failures or issues with the battery that may compromise the safety of individuals in the vicinity of the battery and/or using the battery.

Typically, monitoring of battery cell health is carried out using indicators such as temperature, voltage, current and impedance. These indicators are used to ensure correct charge and discharge conditions are maintained. Using the example of temperature sensors, individual temperatures of cells are not typically monitored. Instead, temperatures are measured across a group of cells to reduce the complexities involved in mounting individual sensors across the battery pack. These traditional cell monitoring methods can result in accuracy issues when determining cell health and ageing, along with cell anomalies going undetected and resulting in potentially catastrophic thermal run-away events.

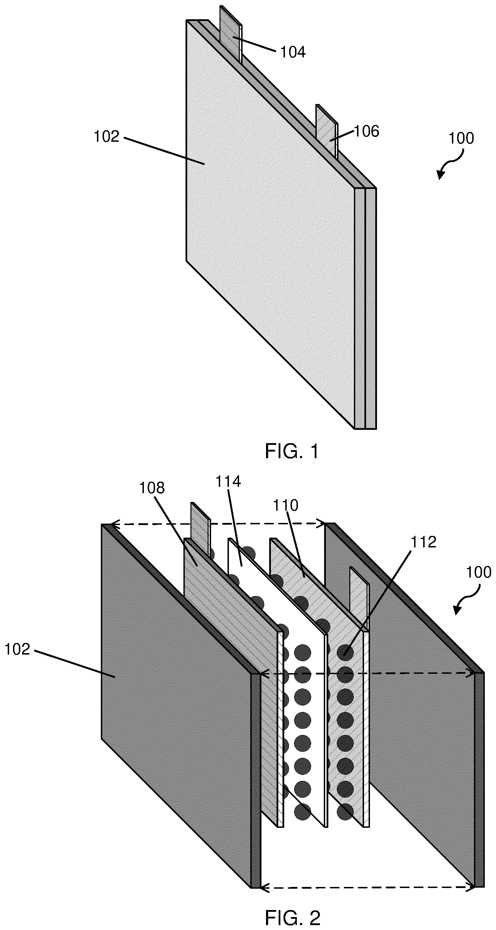

Figure 1 shows a schematic diagram of an example battery cell which can be incorporated into a battery system. The battery cell shown in Figure 1 is a pouch cell 100 as viewed in use (i.e., the battery components are sealed within a casing). The pouch cell 100 includes a casing 102 which encapsulates the components of the battery cell. The pouch cell 100 supplies power via the positive terminal 104 and the negative terminal 106 which protrude through the casing 102. Although Figure 1 shows the terminals protruding from the same end of the pouch cell 100, in another example, the positive terminal 104 may protrude from the opposite end to the negative terminal 106. Pouch cells are widely used in smartphones and tablets due to their slim profile and high energy density (i.e., the amount of energy stored per unit volume) as well as in electric vehicles due to their lightweight properties.

Figure 2 shows a schematic diagram which is an exploded view of the pouch cell illustrated in Figure 1. Figure 2 shows the battery components encased with the casing 102 which includes a cathode 108, an anode 110, an electrolyte 112 and a separator 114. The casing 102 of the pouch cell 100 is typically a laminated foil that is made from aluminium and plastic. In a lithium-ion battery, the cathode 108 is typically made from lithium iron phosphate, lithium nickel manganese cobalt oxide or lithium cobalt oxide. A common anode 110 material used in lithium-ion batteries is graphite since it can hold a large amount of lithium ions. Another commonly used anode material is silicon. The electrolyte 112 is a medium that carries ions between the anode 110 and the cathode 108. The separator 114 is a porous film that prevents the battery from short circuiting by allowing ions to pass through it but also blocks the transport of electrons.

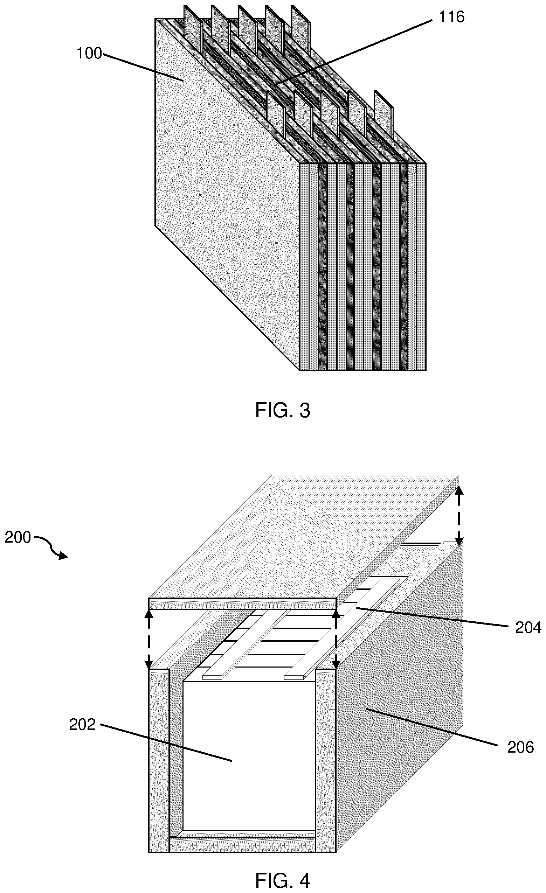

As shown in Figure 2, the pouch cell 100 provides a battery cell with a planar geometry (i.e., a flat component) that can easily be incorporated into devices or vehicles and even stacked together for applications with high power requirements. For example, Figure 3 shows a schematic diagram of multiple pouch cells 100 stacked together. To ensure thermal stability, electrical isolation, structural support, mechanical protection and enhance safety, pouch cells arranged in a stack are typically separated using inter-cell spacers 116. Multiple pouch cells, arranged in a stack or otherwise, can be configured to form a battery system for supplying power. Inter-cell spacers 116 can be made from a variety of materials which are chosen based on the application of the battery. For example, in safety critical applications, inter-cell spacers with resistance to high temperatures may be used to slow any potential thermal runaway events. In some examples, the inter-cell spacers are compression pads specifically designed to dampen any impact on the battery cell as well as allowing pouch cells to "breathe". In other examples, inter-cell spacers and compression are separate components which are both incorporated into a battery cell system. Pouch cells expanding and contracting during charging and discharging cycles is a known phenomenon and will be discussed below in relation to the embodiments of this disclosure. The use of compression pads allows the pouch cells to expand and contract without damaging the casing or internal structure of a battery system housing a plurality of battery cells. Compression pads also ensure a consistent pressure on adjacent cells to conform to industry standards.

Another example of a battery system is the prismatic battery which is shown in Figure 4. The cell construction in prismatic battery cells is similar to that in pouch cells where layers or sheets of electrode material with planar geometries are stacked with electrolyte and separators arranged in between the electrodes. Figure 4 shows a prismatic battery with a plurality of prismatic cells 202 where the terminals of the prismatic cells are connected with a busbar 204. The components of the prismatic battery are stored in a battery enclosure 206 which is often made out of hard plastic, aluminium or steel.

During the charging and discharging of battery cells, it has been observed that battery cells undergo expansion and contraction. This is particularly prevalent in pouch cells due to their flexible outer shell and is often referred to as "cell breathing". In some cases the amount of cell breathing (i.e., the magnitude of the expansion and contraction of the cell) may be representative of the age and health of the cell. New battery technologies such as silicon nanowire cells have been shown to undergo significant cell breathing as compared to conventional lithium-ion cells. A reduction in the amount cell breathing during the lifespan of the cell can serve as an indicator of the battery age or health and as a result, an indicator of a reduction in energy density (i.e., capacity) of a battery cell. It has also been shown that battery cells may gradually expand throughout their lifespan. Therefore, a comparison of the current thickness of a battery cell to its original thickness can also provide an indication as to the age or health of the battery.

A battery cell can also expand due to failures within the cell. Gas can build up within the cell due to various electrochemical and chemical reactions involving the major cell components: the anode, cathode and electrolyte. Conventionally, battery cells are degassed as part of the manufacturing process, however a small amount of gas generation is possible in use. Contaminated battery cells (e.g., water droplets present in the cell) have also been shown to generate undesirable amounts of gas within the cell. This gas generation can lead to a gradual swelling of the cell and eventually to the casing of the cell bursting.

In more catastrophic scenarios, thermal runaway events can occur which results in a rapid expansion, and in some cases, an explosion of the cell. Thermal runaway occurs when the temperature inside the battery reaches the point that causes a chemical reaction to occur inside the battery which produces even more heat and can cause a fire. Temperature rises in a cell may be caused by overcharging, charging the battery too quickly, short circuits, internal electrical resistance as well as external sources of heat.

The inventors have found that incorporating a novel flat optical strain sensor into a battery system (either into the battery cells themselves or into inter-cell spacers) can be used to reliably monitor the condition of the battery as well detecting early indications of battery failure. Since the expansion of battery cells can be related to battery health and failures of the battery (as discussed above), the use of a strain sensor in the battery is able to provide the necessary data to quantify the battery health as well as detecting failure at an early stage. In addition, the inventors have found that using a novel flat optical strain sensor in the form of a planar optical waveguide having a planar geometry is particularly effective in a battery system as explained herein.

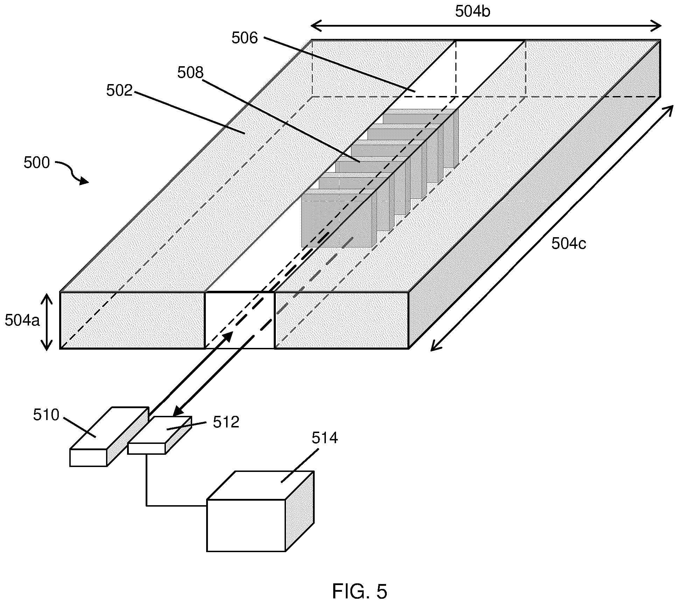

Figure 5 shows a schematic diagram of a planar optical waveguide 500 which functions as a novel flat optical strain sensor, which as described herein, is used to monitor a battery system. The planar optical waveguide 500 has a planar geometry 502, meaning that the waveguide has a thickness 504a which is significantly less than the width 504b and length 504c of the waveguide. For example, the width 504b of the planar optical waveguide 500 may be 250 to 1250 µm where the thickness 504a is 50 to 500 µm. In one example, the thickness of the planar optical waveguide 50 µm or less and the width of the planar optical waveguide is an order of magnitude larger than the thickness (e.g., 500 µm). In another example, the thickness of the planar optical waveguide is 30 µm or less.

The planar optical waveguide 500 includes a core 506 which extends longitudinally along the length 504c of the waveguide. The core 506 extends along an optical propagation direction of the planar optical waveguide. The core 506 can include a Bragg grating 508 arranged along the length of the core. The Bragg grating 508 includes a periodic structure comprising a series of regions with alternating refractive indexes along the optical propagation direction of the core. The Bragg grating acts to reflect incident light at a wavelength, or wavelengths, determined by the periodic structure. The reflected light constitutes the spectral response of the Bragg grating 508. Light propagating in the waveguide in which the Bragg grating is positioned undergoes some reflection from the grating if it has a wavelength within the grating's spectral response and this reflected light can be detected and monitored.

Utilising Bragg gratings for strain sensing is a well-established technique which functions on the principle that the reflected light from the Bragg grating gives a different spectral response if the periodic structure of the grating is physically distorted due to strain exerted on the grating. Hence, a change, and the amount of strain can be monitored and calculated using the altered spectral response. In this disclosure, the planar optical waveguide 500 is positioned in the vicinity of one or more battery cells such that when the battery cells expand, they exert a force on the planar optical waveguide 500. The core 506 and the Bragg grating 508 of the planar optical waveguide 500 are therefore distorted due to the strain exerted by the expanding battery cells on the waveguide (e.g., compression of the waveguide). This makes detection and monitoring of battery cell expansion possible.

Typically, Bragg gratings are formed inside optical fibres when used to measure strain. However, for the strain measurements for the spectral response of the Bragg grating to be consistent, the grating has to be orientated in a consistent fashion relative to the structure in which the optical is measuring the strain of. Otherwise, if the orientation of the Bragg grating were to change through time, the strain measurements measured from the Bragg grating would begin to induce large amounts of error in the strain measurements. Due to the cylindrical form of optical fibres, they are susceptible to rolling and are difficult to hold in place reliably. This makes them particularly unsuitable for monitoring battery cells since replacing or fixing fibre based strain sensors would require extraction from the cell or battery system and, in some cases, deconstruction of the cell or the entire battery system.

The planar optical waveguide 500 used as an optical strain sensor, as proposed herein, is particularly effective in a battery system since it can be mounted flat (or parallel) to the components of battery cells. Put differently, the polarization orientation defined by the geometry of the waveguide is effectively locked to the geometry of the battery cell components when it is mounted. This is due to its planar geometry reflecting the planar geometry of the battery components. The likelihood of the orientation of the Bragg grating 508 and the core 506 being altered through time is significantly reduced since it is fixed to the orientation of the battery cell components. This therefore ensures that the planar optical waveguide 500 can be used to reliably monitor the expansion and contraction of battery cells over prolonged periods of time. In addition, the volumetric expansion across the structure of battery cells is not always linear, since different parts of the cell may expand at different rates. The planar optical waveguide incorporated into a battery system, as explained below, is able to detect such non-liner volumetric expansion due to its structure of planar geometry being fixed to the structure of the battery components.

Before describing how a strain measurement using the planar optical waveguide 500 is performed, it should be appreciated that the planar waveguide can detect various forces which distort the physical properties or geometry of the waveguide. These include the stretching and compression resulting in a strain on the waveguide.

To perform a strain measurement using the planar optical waveguide 500, the optical strain sensor may also include a light source 510 which is optically connected (i.e., using an optical fibre or any other suitable light transmitting means) to the planar optical waveguide 500. The light source 510 is configured to provide light as an input signal into the planar optical waveguide 500 such that light is reflected off or transmits through the Bragg grating 508. The optical strain sensor may also include a detector 512 also optically connected to the planar optical waveguide 500 and configured to detect a spectral response resulting from the backpropagation of the input signal being emitted from the core 506 of the waveguide. The spectral response of the input signal exiting the core 506 of the planar optical waveguide 500 includes light reflected by the Bragg grating 508. Therefore, any distortion to the Bragg grating caused by the expansion or contraction of a battery cell will result in a different spectral response.

Although it is not depicted in Figure 5, the spectral response of the input signal exiting the core 506 may also be detected in transmission. In this example, light is transmitted through the Bragg grating 508 and emitted out of the opposite end of the core 506 to which the input signal is supplied. In this example, the detector is positioned at the opposite end of the core 506 of the planar optical waveguide 500 and is configured to detect the spectral response of the light transmitted through the Bragg grating 508.

As previously discussed, the spectral response of the input signal exiting the core 506 may include light reflected from or transmitted through the Bragg grating 508. However, a change to the birefringence in the spectral response of the light exiting the core 506 of the planar optical waveguide 500 can also be used to detect the strain exerted on the waveguide.

In some examples, the core 506 of the planar optical waveguide 500 may be configured with an asymmetry aligned with the external dimensions of the planar optical waveguide 500. The asymmetry in the core can originate from an asymmetric physical cross-section of the core. For example, the thickness of the core may be less than the width of the core 506. In another example, the asymmetry in the core may originate from the refractive index profile of the core. For example, the refractive index in the direction of the thickness 504a of the core may be different to the refractive index in the direction parallel to the width of the core 506. In another example, the asymmetry in the core 506 stems from both the asymmetric physical cross-section and the refractive index profile of the core.

The asymmetry in the core 506 provides birefringence such that the two orthogonal polarisations of light (transverse electric and transverse magnetic) propagating along the core experience different propagating conditions. For example, the two polarisations may propagate at different speeds through the waveguide. Using Figure 5 as an example, with the propagating direction of the light is orientated along the length 504c of the waveguide, the transverse electric and transverse magnetic orthogonal polarisations of the light may be orientated along the thickness 504a and width 504b of the waveguide respectively. The difference in propagating conditions means the transverse electric and transverse magnetic polarisations of the light propagating through the core 506 interact differently with the Bragg grating 508 and hence the spectral response of the light exiting the core 506 will exhibit birefringence that is detectable by the detector 512. For example, the detector 512 may be configured to measure the polarisation of the light exiting the waveguide.

Since the asymmetry in the core 506 is aligned with the external dimensions of the planar optical waveguide 500, when the planar optical waveguide is mounted flat or parallel to the battery components of a battery cell, the polarization orientation of the light passing through the core 506 of the waveguide is inherently locked to the geometry of the battery cell components. Therefore, the planar optical waveguide 500 enables simultaneous detection of multiple strain components exerted by the battery cell components because any change in the birefringence can be caused by strain on the waveguide in multiple directions. This provides the benefit of being able to reliably detect non-liner volumetric expansion of battery cells.

The birefringence remains consistent when the planar optical waveguide 500 is not subjected to any distortion since the propagating conditions within the waveguide are unchanged. The factors affecting the propagating conditions within the waveguide include the dimensions of the waveguide and Bragg grating, and the properties of the waveguide material. Both of these factors can be influenced by forces exerted on the waveguide. For example, distortion of the planar optical waveguide 500 influences the physical dimensions of the waveguide core 506 due to the stretching or compression of the width or height of the waveguide. The distortion of the waveguide material also results in a change to the strain-optic response since compressing or stretching the waveguide material can affect the refractive index of the material in the direction of the stretch or compression.

In summary, a change in the spectral response of the input signal exiting the core 506 of the planar optical waveguide 500 is an indication of a distortion of the Bragg grating 508 positioned within the core of the waveguide and/or a distortion of the entire waveguide causing a change in the directionally dependent propagating properties of the waveguide.
The optical strain sensor may also include a controller 514 configured to receive the spectral response from the detector 512. The controller 514 is configured to calculate a strain magnitude exerted on the planar optical waveguide using the spectral response provided by the detector 512. As will be discussed in more detail below, the planar optical waveguide can be positioned in various locations of a battery system to measure strain caused by the expansion the battery cells in the system either directly, by incorporating the planar optical waveguide into the battery cell, or indirectly, by incorporating the planar optical waveguide into inter-cell spacers separating the battery cells in the battery system.

To provide an indication of the battery health or performance associated with the capacity of the battery, the controller 514 may be configured to record the strain magnitude during multiple charging and discharging cycles of the battery system. This may also include recording strain magnitudes for individual battery cells in the system. As discussed earlier, the amount of cell breathing (the maximum expansion and contraction of the cell during charging and discharging) can serve as an indicator of the battery age or health and can therefore be used to assess the current performance of a battery cell. The controller 514 may therefore be configured to calculate a reduction of a delta between the strain magnitude measured when the battery system is charged compared to when the battery is discharged over the multiple charging and discharging cycles. Using the calculate reduction of the delta in strain magnitude between charged and discharged states indicating volumetric changes of the cells, the controller 514 can then calculate a battery performance indication. For example, the battery performance indication may be a percentage the original strain magnitude delta measured during the first charge cycle of the battery cell. In another example, the battery performance indication may be a percentage of the original battery capacity calculated indirectly from the change in the expansion of the battery cell.

The battery performance indication may also be calculated based on the overall expansion of the battery through time. For example, the magnitude of the strain exerted by a battery cell on a planar optical waveguide when the battery cell is charged/discharged may be measured throughout the lifespan of the battery cell. As discussed previously, the overall expansion of a battery cell can indicate ageing and a degradation of the health of the cell. It follows that the strain measured by the planar optical waveguide when the battery cell is charged or discharged will gradually increase throughout the life of the battery cell. Therefore, a battery performance indication can be calculated by comparing the magnitude of the strain (when the battery cell is in a charged or a discharged state) during an initial charge cycle and a current charge cycle of the battery cell. This may be expressed as a percentage increase, where a higher percentage increase reflects a lower battery performance indication.

These examples show how the planar optical waveguide 500 can be used to provide an indication as to the health of a battery cell or indeed a battery system.

In some examples, the battery performance indication derived from monitoring the strain magnitude during charge and discharge cycles of the battery system may be combined with data from other sensors incorporated into the battery cells or system. Combining the strain magnitude data with other sensor data improves the level of detail available when assessing the condition of a battery during use. To this end, the battery system may also include additional sensors such as a temperature sensor, a voltage sensor configured to detect the voltage between the electrodes in battery cells, a current sensor configured to detect the current supplied by battery cells or an impedance sensor configured to detect the impedance between electrodes within battery cells.

In another example, the planar optical waveguide 500 can also be used to measure temperature changes within the battery system, specifically in or in the vicinity of a battery cell. A change of temperature can result in an expansion, or a contraction of the materials used in the Bragg grating 508 thus causing a physical change to the structure of the grating. As described previously, if the periodic structure of the Bragg grating 508 is changed, a different spectral response from the grating will be detected. This change in the spectral response can be used to measure a temperature change. The spectral response may be calibrated to a specific temperature so that any detected changes to the spectral response can be converted into a temperature measurement.

The strain magnitude measurements may also be used to provide an early indication of imminent battery failure, rupture or even that the battery may be at risk of exploding or causing a fire. To perform this function, the controller 514 may be configured to record the strain magnitude associated with a battery cell or battery system continuously over time. The controller 514 may then be configured to detect a rapid rate of change in the strain magnitude which is reflective of a rapid expansion of one or more battery cells. To enable the automatic detection of a rapid rate of a change, a predetermined rate of change threshold may be defined. For example, the rate of change threshold may be set to a certain unit of force exerted on the strain sensor per unit time.

In response to detecting such a rate of change, the controller 514 may be configured to perform a remedial action or transmit a signal to another entity to initiate a remedial action. In some examples, the controller 514 may output an alert notification in response to detecting the rapid rate of change. This is particularly useful in safety critical battery applications such as electric vehicles or energy storage. The alert notification can be used to order people to evacuate an area or leave a vehicle.

In another example, in response to detecting the rate of change exceeding the predetermined threshold, the controller 514 may send a signal to a circuit breaker connected to the battery system ordering the circuit breaker to prevent current flowing through the battery system. Although doing this would not prevent chemical reactions from occurring within battery cells, it may slow or delay any hazardous events occurring as shorting of the battery circuits or the risk of creating sparks igniting flammable gases in the cells would be reduced.

Traditionally, temperature sensors are used to provide alerts regarding critical failure in battery systems. However, by the time the temperature has increased significantly in battery systems, it is often too late to implement remedial action or indeed safely evacuate an area or vehicle. The optical strain sensor described herein can provide earlier indications of battery failure. This is because a rapid change in the expansion of the battery can indicate an increase in the amount of gas produced in the cell or indeed if the battery is being charged too quickly or is being overcharged.

To improve the sensitivity of the planar optical waveguide 500, a void or cavity may be incorporated within the microstructure of the waveguide. In one example, the core 506 of the waveguide may comprise such a microstructure. During testing of such planar optical waveguides, introducing such microstructural features into the internal structure has been shown to improve the sensitivity to forces exerted on the waveguide. A planar optical waveguide with greater sensitivity may be able to provide more detailed strain data and therefore more detailed information regarding the condition of battery cells. In addition, a more sensitive planar optical waveguide 500 with microstructural features may also enable earlier detection of rapid expansion of battery cells thus improving the safety features provided by the optical strain sensor.

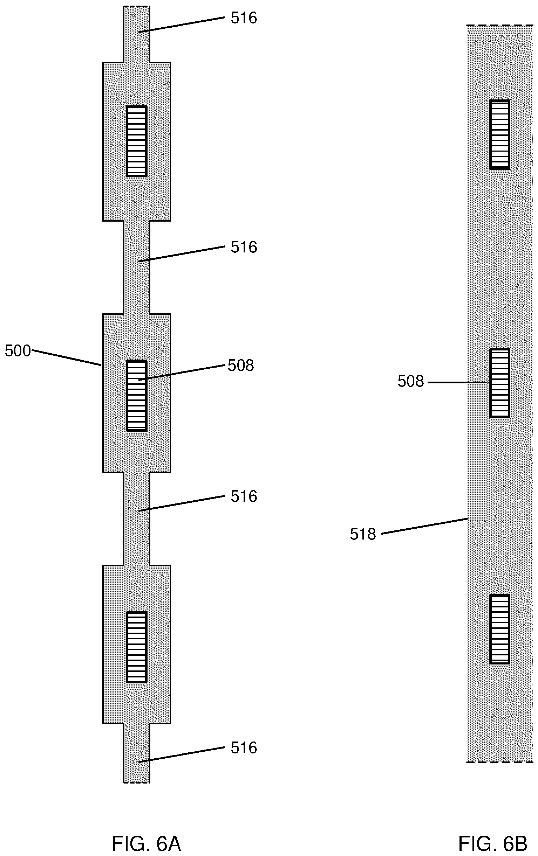

Figures 6A and 6B show additional configurations of the planar optical waveguide 500. In a lot of cases, monitoring of battery cells is required in multiple locations within a battery system. For example, a battery system may comprise a large number of stacked pouch cells, or the battery system may be a prismatic battery. To avoid the need for individual optical sensors to be installed in multiple parts of a battery system, where each sensor has its only light source and detector, the planar optical waveguides may be connected to other planar optical waveguides. Put differently, the planar optical waveguides may be "daisy-chained" together as shown in Figures 6A and 6B. In a first example, as illustrated in Figure 6A, an optical fibre 516 may be spliced to at least one end of the planar optical waveguide along the optical propagation direction of the core of the waveguide. For example, a first end of an optical fibre 516 may be spliced to an end of a first planar optical waveguide and a second end of the same optical fibre 516 may be spliced to an end of a second planar optical waveguide.

Another variation is illustrated in Figure 6B, where a continuous planar fiber is used. In the context of this disclosure, a continuous planar fiber means that the cross sectional geometry of the chain of planar optical waveguides remains constant (i.e., the width and thickness of the planar optical waveguide defines the width and thickness of the planar fiber linking the planar optical waveguides). In contrast to the example of Figure 6A, the multiple planar optical waveguides are incorporated into a continuous fibre 518 of planar geometry. The example illustrated in Figure 6B therefore does not require optical fibre to be spliced to the ends of the planar optical waveguide 500. An advantage of using a continuous fibre 518 of planar geometry is that it is easier to seal the casing of the battery cell around a flat fiber (i.e., of planar geometry) rather than a traditional cylindrical optical fiber. An additional advantage of using a continuous planar fiber as opposed to splicing optical fiber to the planar optical waveguide is that the risk of piercing materials within the battery cell is reduced since inserting fibers with sharp ends are not required. On the other hand, an advantage of using optical fiber (spliced to the planar optical waveguides) is that, in the event of damage to part of the chain of planar optical waveguides, the entire chain does not need to be replaced. Damaged parts of the chain can be replaced by simply splicing new planar optical waveguides to an existing chain using optical fibre.

The continuous chain of planar optical waveguides 500, as illustrated in Figures 6A and 6B, may be weaved through a structure of a battery system enabling different planar optical waveguides 500 to be positioned in different battery cells 100, 202 or in different inter-cell spacers 116.

So that the strain can be detected from individual Bragg gratings 508 of the continuous chain of planar optical waveguides 500, the pitch of the Bragg gratings 508 (i.e., the spacing between the different regions of alternative refractive indexes) may vary between planar optical waveguides 500. Having different Bragg grating 508 pitches along the chain of waveguides enables a more precise identification of individual battery performance and failure characterisation within a battery system. The different pitches of the Bragg gratings 508 may be selected, for example, such that certain wavelengths of light can pass through a first planar optical waveguide 508 but is reflected by a subsequent planar optical waveguide 508 along the chain of waveguides. A log can then be maintained which associates particular locations within the battery system (either within battery cells or in inter-cell spacers) with the different wavelengths expected to be reflected at those locations.

The benefits provided by incorporating the planar optical waveguide 500 as an optical strain sensor in battery systems has been established above. However, additional benefits can be achieved by positioning the planar optical waveguide in specific locations within a battery system.

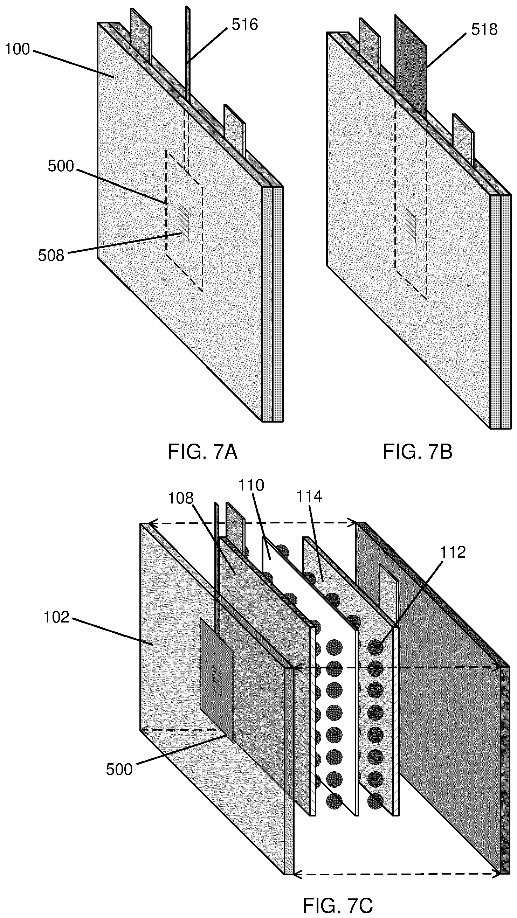

Figures 7A, 7B, and 7C show examples of where the planar optical waveguide 500, with an integrated Bragg grating 508, is incorporated within a pouch cell 102. The schematic diagrams of the planar optical waveguides 500 in Figures 7A, 7B, and 7C are not to scale. In reality, the size of the planar optical waveguide 500 is very small compared to the size battery cell components. The planar optical waveguide 500 is presented larger here, relative to the battery cell 102, to clearly show how it is incorporated. Figures 7A and 7B show the pouch cell 100 with the casing 102 closed, whereas Figure 7C shows the pouch cell 100 with the battery components in an exploded view. Although the example shown in Figures 7A,7B, and 7C show the planar optical waveguide 500 incorporated into a pouch cell 100, it can also be incorporated into the prismatic cells 202 of a prismatic battery 200. Figure 7A also shows the planar optical waveguide 500 spliced to an optical fibre 516 which can be connected to other planar optical waveguides or to a light source 510 and detector 512. **In** the same way that the positive 104 and negative 106 terminals protrude from the casing 102 of the pouch cell 100, the optical fibre 516 may also protrude from the casing 102. This may enable the linking between planar optical waveguides 500 in different positions of a battery system as illustrated by the continuous chain of waveguides shown in Figure 6A. Alternatively, as illustrated in Figure 7B, a continuous planar fibre 518 (as provided in Figure 6B) protrudes from the casing 102 where the continuous planar fibre 518 incorporates the planar optical waveguide 500. As discussed previously, the flat geometry of the continuous planar fibre 518 protruding out of the cell casing 102 facilitates a more reliable seal created by the casing 102. However, using the optical fiber shown in Figure 7A may be more flexible and thus easier to weave through a complex battery system.

As alluded to earlier, an advantage of using the planar optical waveguide 500 as an optical strain sensor in battery cells is that due to it sharing the same planar geometrical characteristics of the battery cell components (see the anode 110, cathode 108 and separator 114 of Figure 7C) and the casing 102 of the pouch, the planar optical waveguide 500 can be mounted flat or parallel against the casing 102 or the battery components. In other words, the planar optical waveguide 500 can be incorporated as part of the stack of battery components within the casing 102 of the battery cell. This means that the optical plane of the planar optical waveguide 500 is unlikely to change from the plane parallel to the other battery components. Thus, the orientation of the Bragg grating 508 relative to the battery components is unlikely to change.

In one example, to simplify the construction of the battery cell and to also avoid interrupting the ionic flow between the electrodes in the battery cell, the planar optical waveguide 500 may be affixed to an inner surface of the battery cell casing 102 as illustrated by the example in Figure 7C. In another example, the planar optical waveguide 500 may be affixed to an outer surface of the battery cell casing 102 so that the energy density of the battery cell is not reduced by using up space within the cell.

Incorporating the planar optical waveguide 500 into the battery cell means strain can be measured directly within the battery cell meaning any rapid expansion of the battery cell can be detected earlier during the event. This is because any gas exerting pressure on the inner surface of the casing 102 of the battery cell also exerts a strain on the planar optical waveguide 500. Since it is desirable for the planar optical waveguide 500 to be sensitive to strain and for the casing 102 to be more resistant to strain, detecting the early indications of rapid expansion are more effective when performed within the battery cell.

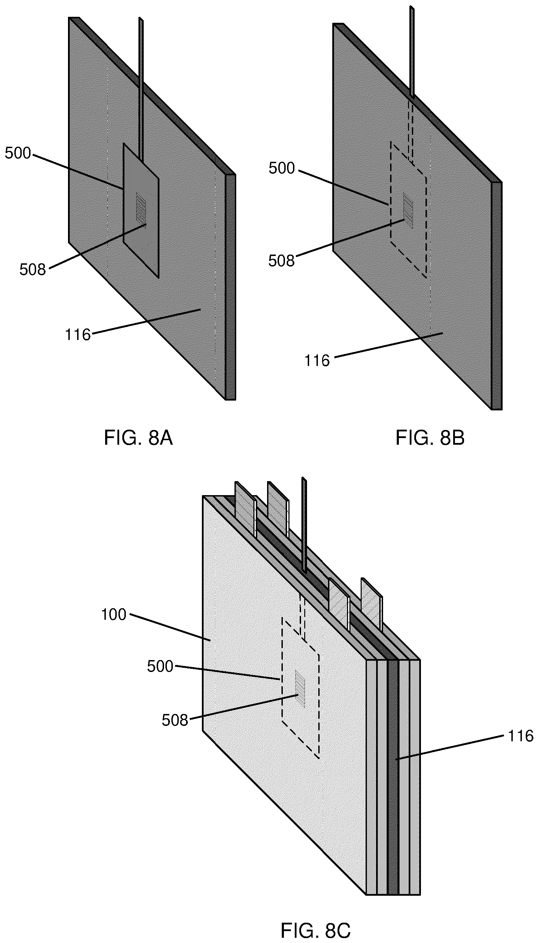

Figures 8A, 8B and 8C show examples of the planar optical waveguide 500 being a part of an inter-cell spacer 116. The relative sizes of the planar optical waveguide 500 and the spacer 116 is not to scale is also the case with Figures 7A, 7B and 7C. As discussed previously, inter-cell spacers 116 sit between the battery cells in a battery system and are designed to separate the cells whilst also allowing the cells to expand as they breathe during charge and discharge cycles. For example, the inter-cell spacer 116 may be a compression pad. Making the planar optical waveguide 500 a part of the inter-cell spacers 116 means the battery components of battery cells are unaffected and it also removes any risk of degradation of the planar optical waveguide 500 by the electrolyte within the battery cell. Volume is also not taken up by introducing an additional component within the battery, meaning the energy density of the battery cell is unaffected. When the battery cells expand, they exert a force on the inter-cell spacers 116 that compress to allow the battery cells to breathe. A planar optical waveguide 500, incorporated in the inter-cell spacer 116, is therefore distorted when the inter-cell spacer 116 is compressed. Performing strain measurements using the planar optical waveguide 500, incorporated into the inter-cell spacer 116, thus enables the monitoring of the expansion and contraction of the battery cell adjacent to the inter-cell spacer 116.

Figure 8A shows a schematic diagram of an inter-cell spacer 116 where a planar optical waveguide 500 is affixed to a surface of the inter-cell spacer 116. In this example, the inter-cell spacer 116 also has a planar geometry. This configuration may be preferred to simplify the manufacture of the inter-cell spacer 116 since fixing the planar optical waveguide 500 to the inter-cell spacer 116 can be performed in a separate manufacturing step. The planar optical waveguide 500 can also be affixed to both sides of an inter-cell spacer 116 meaning the expansion of the battery cells 100 either side of the spacer 116 can be detected. In addition, by fixing the planar optical waveguide 500 on a surface of the inter-cell spacer 116, the waveguide is more accessible and so can be easily linked to additional planar optical waveguides 500 as shown in the examples illustrated in Figures 6A and 6B. If the planar optical waveguide 500 is affixed to the surface of the inter-cell spacers 116, it may be beneficial to use a thin inter-cell spacer 116, compared to conventional spacers, which can easily distort in response to the force applied by the expansion of the battery cell.

Figure 8B shows a schematic diagram of an inter-cell spacer 116 where a planar optical waveguide 500 is held in a defined cavity within the structure of the inter-cell spacer 116. Including the waveguide within the spacer is the preferred position if maintaining the integrity and longevity of the planar optical waveguide 500 is prioritised. This is because, the inter-cell spacer serves to protect the waveguide from any contaminants or impact. However, it may also reduce the sensitivity of the planar optical waveguide 500 to battery cell expansion since the expansion is detected via the compression of the inter-cell spacer 116. **In** addition, the cavity for holding the planar optical waveguide 500 may be shaped or minor enough such that uniform pressure is applied by the inter-cell space to adjacent battery cells. Figure 8C shows a schematic diagram of an inter-cell spacer 116, including the planar optical waveguide 500, in between two battery cells 100.

Although it is not illustrated in Figures 8A and 8B, in another example the planar optical waveguide 500 can be incorporated into the inter-cell spacer by placing the waveguide in a defined recess present on a surface of the inter-cell spacer 116. In this example, the top side (defined by the width 504b and length 504c of the waveguide as shown in Figure 5) is exposed from the inter-cell spacer, whereas the sides of the waveguide (defined by the thickness 504a as shown in Figure 5) are abutted to the surface of the inter-cell spacer 116. Positioning the planar optical waveguide 500 in a defined recess on the surface of the inter-cell spacer may be considered a compromise between positioning the waveguide on the surface of and within the inter-cell spacer in terms of sensitivity and protection. For example, the planar optical waveguide 500 positioned in the recess is afforded more protection compared to simply affixing it to the surface of the inter-cell spacer 116 however it may be less sensitive to distortion since the sides are secured by the surface of the inter-cell spacer 116.

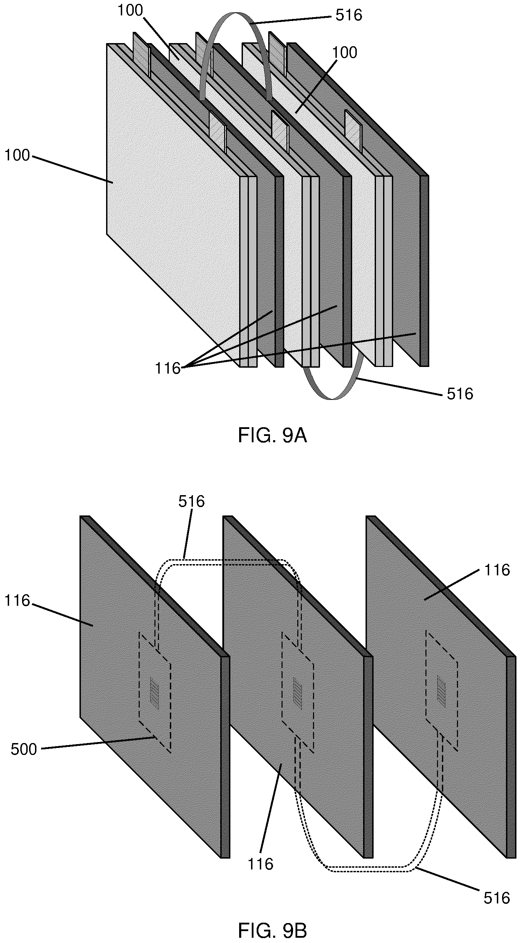

Figures 9A shows a schematic diagram of the linking of multiple planar optical waveguides 500 with optical fibre 516 in a continuous chain through a battery system of multiple battery cells 100. The specific example of Figures 9A and 9B shows multiple planar optical waveguides 500 as part of the multiple intercell spacers separating the multiple battery cells 100. Figure 9B shows the battery system shown in Figure 9A, with the battery cells to highlight how a series of inter-cell spacers, each having a planar optical waveguide 500, can be linked with optical fibre 516. In the example of Figure 9B, battery cells can simply be inserted into the gaps between the inter-cell spacers 116 which are already fitted with the optical strain sensors to monitor battery cell performance and detect early indications of battery cell failure. In addition, this example makes replacing battery cells in the battery system a simple process and the optical strain sensors do not need to be replaced. Although it is not included in Figures 9A and 9B, the planar optical waveguides 500 may alternatively be linked via the continuous planar fibre as illustrated in Figure 6B.

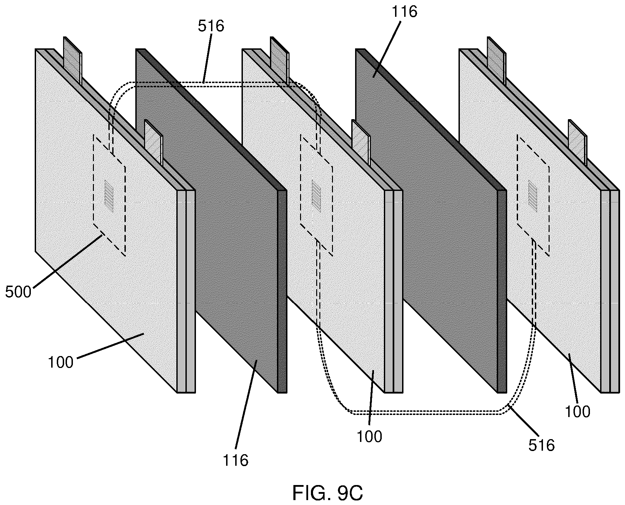

Figure 9C shows another example of linking multiple planar optical waveguides 500 with an optical fibre 516 in a continuous chain through a battery system of multiple battery cells 100. In contrast to Figures 9A and 9B, the series of planar optical waveguides are incorporated into the series of battery cells 100, where the battery cells 100 are separated by inter-cell spacers 116. Although it is not included in Figure 9C, the planar optical waveguides 500 may alternatively be linked via the continuous planar fibre as illustrated in Figure 6B.

## Claims

1. An optical strain sensor for use in a battery system, the optical strain sensor comprising:
a planar optical waveguide (500) having a planar geometry comprising a Bragg grating (508) located in a core (506) of the planar optical waveguide, wherein the core extends longitudinally along a first direction (504c) of the planar optical waveguide and defines an optical propagation direction of the planar optical waveguide.

2. The optical strain sensor according claim 1, further comprising an optical fibre (516) spliced to at least one of the ends of the planar optical waveguide along the optical propagation direction of the planar optical waveguide.

3. The optical strain sensor according to claim 2, wherein a first end of the optical fibre (516) is spliced to an end of a first planar optical waveguide and a second end of the optical fibre is spliced to an end of a second planar optical waveguide.

4. The optical strain sensor according to claim 1, wherein a first planar optical waveguide and second planar optical waveguide are incorporated into a continuous planar fibre (518).

5. The optical strain sensor according to any one of the preceding claims, further comprising:
a light source (510) optically connected to the planar optical waveguide (500), wherein the light source is configured to provide an input signal into the planar optical waveguide;
a detector (512) optically connected to the planar optical waveguide, wherein the detector is configured to detect a spectral response from the input signal exiting the planar optical waveguide via the Bragg grating; and
a controller (514) configured to:
receive the spectral response from the detector; and
calculate a strain magnitude exerted on the planar optical waveguide using the spectral response.

6. The optical strain sensor according to claim 5, wherein the controller (514) is further configured to:
record the strain magnitude during multiple charging and discharging cycles of the battery system;
calculate a reduction of a delta between the magnitude of the strain measured when the battery system is charged compared to when the battery is discharged over the multiple charging and discharging cycles; and
calculate and output a battery performance indication using the calculated reduction of the delta.

7. A battery cell (100) comprising:
a casing (102), the casing encapsulating battery components, the battery components including at least one anode (110) and at least one cathode (112) separated by an electrolyte (112) and a separator (114); and
the optical strain sensor of any of claims 1 to 4, wherein the planar optical waveguide (500) is incorporated inside the casing.

8. The battery cell according to claim 7, wherein the battery cell components have a planar geometry; and
wherein the planar geometries of the battery cell components and the planar optical waveguide are orientated parallel to one another.

9. The battery cell according to claim 7 or claim 8, wherein the planar optical waveguide is affixed to an inner surface of the casing (102).

10. An inter-cell spacer (116) for separating battery cells in a battery system, comprising:
the optical strain sensor (500) of any of claims 1 to 4.

11. The inter-cell spacer (116) according to claim 10, wherein the inter-cell spacer has a planar geometry; and
wherein the planar geometries of the inter-cell spacer and the planar optical waveguide (500) are orientated parallel to one another.

12. A battery system comprising:
a plurality of battery cells (100) including at least one battery cell of any one of claims 7 to 9; and/or
a plurality of inter-cell spacers (116) including at least one inter-cell spacer of any one of claims 10 to 11.

13. The battery system according to claim 12, further comprising:
the optical strain sensor of any one of claims 5 to 6.

14. A method of monitoring the condition of a battery system, the method comprising:
providing an input signal, using a light source (510), into a planar optical waveguide (500) having a planar geometry comprising a Bragg grating (508) located in a core (506) of the planar optical waveguide, wherein the core extends longitudinally along a first direction of the planar optical waveguide and defines an optical propagation direction (504c) of the planar optical waveguide, and wherein the planar optical waveguide is incorporated inside a casing (102) of a battery cell (100) or is part of an inter-cell spacer (116) in the battery system;
detecting a spectral response, using a detector (512), from the input signal exiting the planar optical waveguide via the Bragg grating; and
calculating a strain magnitude exerted on the planar optical waveguide using the detected spectral response.

15. The method according to claim 14, further comprising:
recording the strain magnitude during multiple charging and discharging cycles of the battery system;
calculating a reduction of a delta between the magnitude of the strain measured when the battery system is charged compared to when the battery is discharged over the multiple charging and discharging cycles; and
calculating and outputting a battery performance indication using the calculated reduction of the delta.
